# FASCICULE DE BREVET EUROPEEN

(11) **EP 0 546 983 B1**
(45) Date de publication et mention de la délivrance du brevet: **08.11.1995**
(21) Numéro de dépôt: 92670006.3
(22) Date de dépôt: 20.11.1992
(51) Int. Cl.: B60L 8/00, B60L 11/12

(54) **Auto électrique de grande autonomie**
Elektro-Auto grosser Reichweite
Long range electric car

(30) Priorité: 09.12.1991 PT 8409 U
(43) Date de publication de la demande: 16.06.1993
(73) Titulaire: Da Costa Lage, Antonio Manuel, P-5400 Chaves (PT)
(72) Inventeur: Da Costa Lage, Antonio Manuel, P-5400 Chaves (PT)

(56) Documents cités:
- WO-A-82/00117
- BE-A- 901 327
- DE-A- 2 830 075
- DE-A- 3 935 304
- FR-A- 2 254 453
- FR-A- 2 346 176
- FR-A- 2 452 398
- GB-A- 1 415 258
- US-A- 4 218 624
- US-A- 4 973 223
- IEEE TRANSACTIONS ON VEHICULAR TECHNOLOGY, vol. VT-26, no. 2, Mai 1977, NEW YORK, US, pages 135 - 143; E.L. LUSTENADER ET AL.: ' Development of a hybrid flywheel/battery drive system for electric vehicle application'

## Description

Une des plus grandes limitations de l'automobile électrique, est actuellement son manque d'autonomie, ainsi que son manque de prestation en terme de vitesse et accelération.

La publication GB-A-1 415 258 décrit une automobile électrique comprenant une boîte de vitesse, un groupe d'accumulateurs, un ensemble de générateurs qui produisent de l'électricité lors du déplacement de l'automobile, ces générateurs étant actionnés par le vent résultant du déplacement de l'automobile.

La publication FR-A-2 346 176 décrit un dispositif permettant de récupérer sous forme pneumatique ou hydraulique l'énergie dissipée dans les organes de freinage et de suspension d'un véhicule.

L'invention a pour but une automobile ne présentant pas les limitations de l'art antérieur, comprenant des générateurs de forme nouvelle, pour que les pertes énergétiques normales soient compensées et de permettre ainsi une augmentation du rayon d'action des voitures.

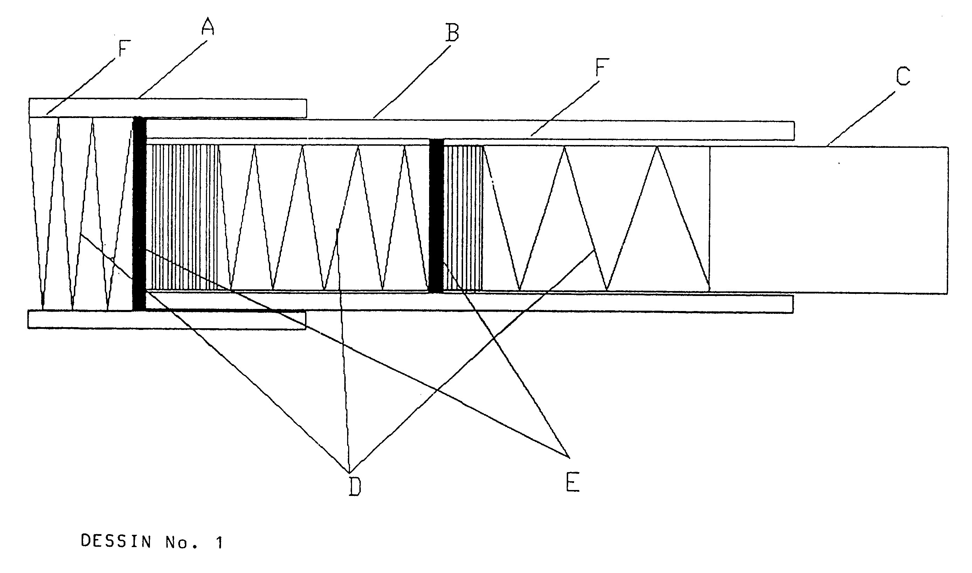

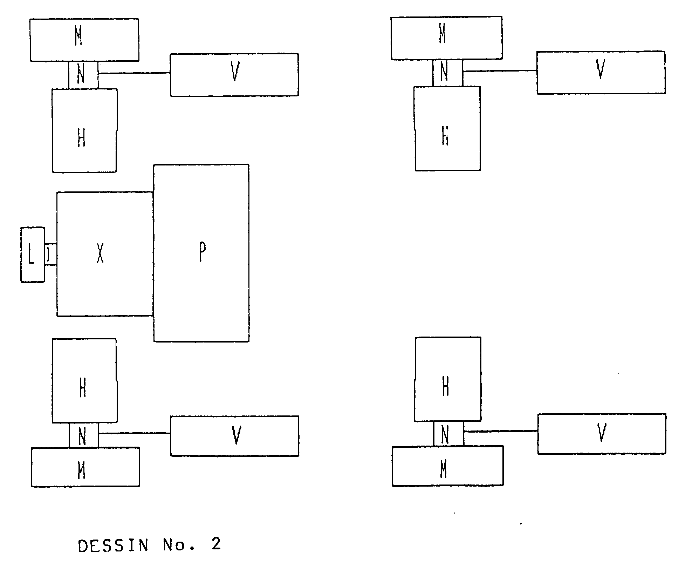

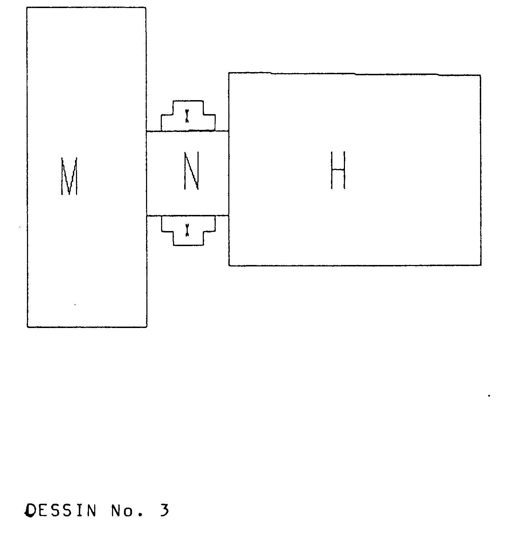

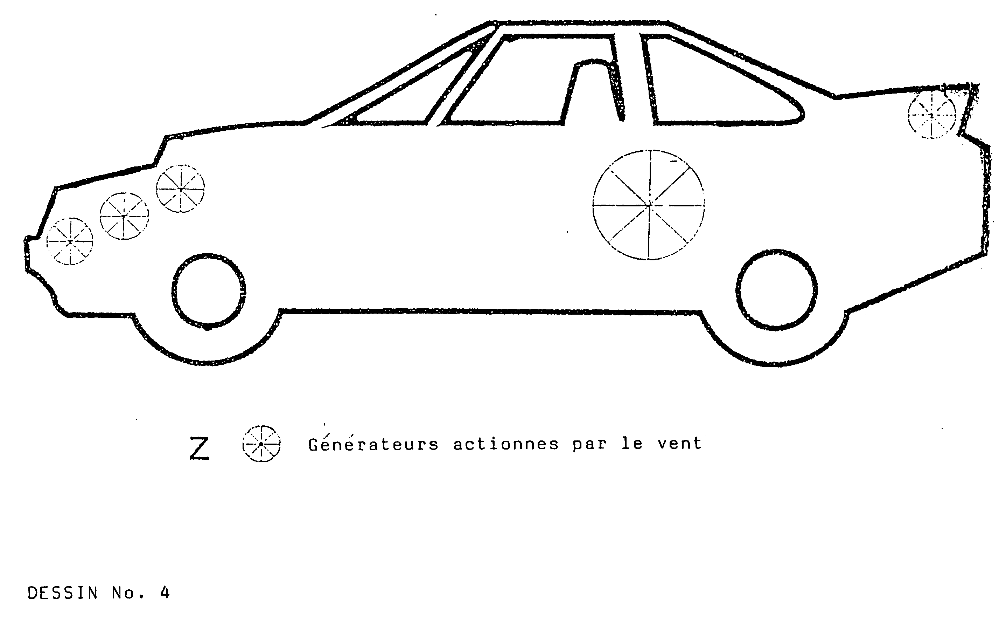

Cet objet est résolu par les caractéristiques de la revendication indépendante 1.
1^{º} Le générateur lié au moteur se caractérise par un essieux commun avec le moteur. Lorsque le moteur se trouve en service, le générateur tourne et ne produit pas d'électricité, et chaque fois, que le moteur est hors fonctionnement il fait une production par commande, exécuté par électrovalves, ce qui provoque une desaccélération plus forte que normale. Dessin n^{º} 2 représente L- le générateur I- l'essieux commun X- le moteur P- boîte à vitesse.
2^{º} Le générateur de freinage est caractérisé par son un essieux en commun avec les roues de la voiture. Lorsque l'on veut freiner la compression des charbons du générateur d'énergie (ou autres mátériaux pour le même effet) sur ces mêmes générateurs provoquera une résistance. Le fonctionnement est similaire à celui des freins, avec en plus production d'électricité. Les commandes de cette opération seront faites avec le même système que celui actuellement en cours. Seule la forme du piston de compression est chargée. Dessin n^{º} 3 représentant M- la roue de la voiture N- la zône de compression H- le générateur.
3^{º} Le générateur de suspension est caractérisé en ce que les amortisseurs actuellement utilisés, seront remplacés par des pompes à piston. Le travail sera de pomper un fluide (l'huile ou l'air) dans un recipient propre, qui alimentera un moteur propre, connecté à un autre générateur. La pompe à piston sera à double action, et l'entrée du fluide avec une attentive affinition de même, que les valves de sécurité dans les lignes de pression de manière à permetre d'éxécuter les mêmes services, que les amortisseurs actuels.
4^{º} Les générateurs de vent sont caractérisés par leurs turbines branchées directement aux essieux du générateur, (une à chaque extrémité, ou à une seulement). Ils sont stratégiquement disposés dans les voitures avec la finalité de tirer profit des courants d'air provoqué par le propre déplacement de l'automobile. Ces turbines peuvent être de diamétre différent où être à géometrie variable. La différence de diamétres des turbines se justifie par le fait de l'utilisation de la voiture en basse ou haute vitesse. Le nombre de turbines est indéterminé, et est limité seulement par leur disposition sur la carrosserie et la production éléctrique souhaitée. Le dessin n^{º} 4 représente l'emplacement possible des turbines.
5^{º} Le générateur d'inertie est caractérisé par son branchement à une roue d'inertie, qui est actionnée par un moteur électrique, qui entre toujours en fonctionnement, quand il existe une production électrique plus grande, que celle que les accumulateurs sont capables de reçevoir, son travail étant de stabiliser l'électricité quelques minutes. En remplacement de la roue d'inertie, mais pour le même service, l'utilisation d'un moteur électrique lié au compresseur d'air, qui peut débiter l'air comprimé dans les mêmes circuits que le générateur de suspension, permet une stabilisation de la production éléctrique. La production électrique la plus forte est obtenue durant le freinage.

La turbine à géometrie variable est caractérisée par des hélices extensibles en deux ou trois éléments avec des ressorts, qui limitent son extension. Avec sa propre rotation et par effet de la force centrifugue, les éléments s'alargissent provoquant ainsi un plus grand appel d'air. Des éléments déja décrits, ce dernier sera le plus lourd avec la finition d'un élargissement de la force centrifugue de manière, que les rotations suivantes n' est pas besoin de tant de force. Le dessin n^{º} 1 représente l'hélice de turbine A- elément B- elément C- elément plus les masses d'inertie D- Les ressorts, qui limitent l'expension E- séparation des éléments F- guide interne des éléments.

La boîte de vitesse est caractérisée par des engrenages en contacts permanents et la traction sera faite par commande hydraulique, à gestion informatique. Dessin n^{º} 2 P

La protection des turbines est faite de manière, à ce que la force du vent soit indépendente de la vitesse de la voiture. La voiture dispose d'une commande placeé à l'avant que analyse en permanence la vitesse du vent, car il est possible de rouler contre le vent.

Les accumulateurs sont partagés en groupes dont l'un fournit de l'energie et l'autre est en recharge. Le permutation des groupes est assurée par gestion informatique.

Les autos électriques de grande autonomie auront un ordinateur central pour faire la gestion des différents générateurs, des accummulateurs, des différentes tensions en ligne et autres périphériques.

## Revendications

1. Automobile électrique de grande autonomie comprenant une boîte de vitesse (P) à gestion informatique, au moins deux groupes d'accumulateurs, un ensemble de générateurs qui produisent constamment de l'électricité lorsque l'automobile se déplace, ces générateurs étant constitués par:
- des générateurs (Z) actionnés par le vent résultant du déplacement de l'automobile, les turbines des générateurs peuvant être à géométrie variable commandées par informatique afin d'améliorer l'aérodynamique;
- des générateurs raccordés à une roue d'inertie mise en rotation par un moteur électrique alimenté par le courant en excès des accumulateurs;
- des générateurs de suspension actionnés par un moteur hydraulique ou à l'air comprimé et alimentés par les amortisseurs (V);
- un générateur (L) ayant un axe commun (I) avec un moteur (X), le moteur (X) et le générateur (L) fonctionnant alternativement, c'est-à-dire que lorsque le moteur se trouve en service, le générateur ne produit pas d'énergie, et lorsque le moteur n'est pas en service, le générateur produit de l'énergie;
- des générateurs de freinage (H) reliés par un essieu commun aux roues (M) de la voiture, le freinage étant obtenu par compression des charbons des générateur (H), ce qui produit également de l'électricité.

2. Automobile de grand autonomie suivant la revendication 1 caractérisée en ce que dans le générateur de suspension les amortisseurs actuellement utilisés sont remplacés par des pompes à piston dont le travail sera de pomper un fluide (l'huile ou l'air) dans un recipient propre, qui alimentera un moteur propre, connecté à un autre générateur, la pompe à piston étant à double action, et son entrée de fluide avec une attentive affinition de même, que les valves de sécurité dans les lignes de pression de maniére à permetre d'éxécuter les mêmes services, que les amortisseurs actuels.

3. Automobile éléctrique de grand autonomie suivant la revendication 1 caractérisée en ce que les générateurs de vent ont leurs turbines branchées directement aux essieux du générateur, (une à chaque extrémité, ou à une seulement), sont stratégiquement disposés dans les voitures avec la finalité de tirer profit des des courants d'air provoqué par le propre déplacement de l'automobile, lesdites turbines pouvant être de diamétre différent ou être à géometrie variable, la différence des diamétres des turbines se justifiant par le fait de l'utilisation de la voiture en basse ou haute vitesse.

4. Automobile éléctrique de grand autonomie suivant la revendication 1 caractérisée en ce que le générateur d'inertie comprend une roue d'inertie, actionnée par un moteur électrique, qui entre toujours en fonctionnement, quand il existe une production électrique plus grande, que celle que les accumulateurs sont capables de reçevoir, son travail étant de stabiliser l'électricité quelques minutes.

5. Automobile éléctrique de grand autonomie suivant la revendication 3 caractérisée en ce que la turbine à géometrie variable comprend des hélices extensibles sous l'effet de sa propre rotation et de la force centrifugue, résultante en deux ou trois éléments avec des ressorts, qui limitent son extension.

6. Automobile éléctrique de grand autonomie suivant la revendication 1 caractérisée par une boîte de vitesse dont les engrenages sont en contact permanent et dont la commande est hydraulique, à gestion informatique. Dessin n^{º} 2 P

7. Automobile éléctrique de grande autonomie suivant la revendication 3 caractérisée en ce que la protection des turbines est faite de manière, à ce que la force du vent soit indépendente à la vitesse de la voiture, la voiture ayant une commande placeé à l'avant qui analyse en permanence la vitesse du vent, car il est possible de rouler contre le vent.

8. Automobile éléctrique de grand autonomie suivant la revendication 1 caractérisée en ce que les accumulateurs sont partagés en groupes dont l'un fournit de l'énergie et l'autre est en recharge, la permutation des groupes étant assurée par gestion informatique.

9. Automobile éléctrique de grande autonomie suivant la revendication 1 caractérisée par un ordinateur central pour faire la gestion des différents générateurs, des accummulateurs, des différentes tensions en ligne et autres périphériques.

## Claims

1. The electric car of great autonomy has a gearbox (P), controlled by computers, at least two sets of accumulators, and a set of generators that constantly produce electricity when the car moves; these generators consist of:
- Generators (Z) activated by wind-force, caused by the moving vehicle, with the turbines switched to the generator which could be of variable sizes (computerized controls) in order to improve the aerodynamics.
- Generators switched to a wheel of inertia put into rotation by an electric motor fed by the electric current that the accumulators cannot receive in excess.
- Generators of suspension activated by an hydraulic motor of compressed air (or oil), and fed by the shock absorbers (V).
- A generator (L) which has a common axle with the motor (X), and they function alternatively. This means that when the motor works, the generator doesn't produce energy, and when the motor doesn't function, the generator produces energy.
- Braking generators (H) switched to an axle of the wheels (M) of the car, with braking obtained by the compression of the coal of the generators (H), which also produces electricity.

2. The electric car of large autonomy following the first claim is characterized by the suspension generator: the actual shock absorbers now utilized are substituted by piston pumps whose task is to pump fluid (oil or air) to deposit that feeds its own motor connected to another generator; the piston pumps will have double action having tune in the entry of the fluid just like the security valves or "the relief valves" on the pression line having the same function as the present shock absorbers.

3. The electric car of great autonomy according to claim 1 is characterized by wind generators that have turbines directly switched to the axle of the generators (one each end or one only) and are strategically placed on the car with the purpose of utilizing currents of air generated by its movement, being of different diameter and a variable shapes. The difference of the diameter of the turbines is justified by the fact of utilizing the car moving at low or high speeds.

4. The electric car of great autonomy is also characterized an inertia generator switched to a wheel of inertia activated by an electric motor that always begins to function when their is an electric production bigger than that which the accumulators are capable of receiving. Its task is to stabilize the electric production for a few seconds.

5. The electric car of great autonomy, in addition to claim 3, is characterized by having a turbine of variable shape composed of extensive blades that stretch by the effect of its own rotation and centrifugal force into 2 or 3 elements, having springs that limit its own extension.

6. The electric car of great autonomy in addition to claim 1 is characterized by having a gearbox in which sprocket wheels are in constant contact in which the hydraulic commands are computerized. See drawing n^{º} 2 (P).

7. The electric car of great autonomy in addition to claim 3 is characterized by protection of the turbines which are made in a way that the force of the wind is independent of the car speed. This electric car has its controls in front in order to analyze the air speed permanently, since it can also move against the wind.

8. The electric car of great autonomy, in addition to claim 1, is characterized by having accumulators which ar divided into two groups in which one provides energy and the other recharges. The exchange of the two groups is insured by computerized controls.

9. The electric car of great autonomy, in addition to claim, 1, is characterized by having a central computer to control the different generators, the accumulators of the different in line tension and other peripheries.

## Patentansprüche

1. Das elektrische Fahrzeug mit grosser Selbststaendigkeit besitzt ein computergesteuertes Getriebe, mindestens zwei Akkumulatorensaetze, eine Anzahl Generatoren die Strom erzeugen immer wenn sich das Fahrzeug bewegt; diese Generatoren setzen sich zusammen aus:
- Generatoren (Z), die vom Fahrtwind angetrieben werden; die Turbinen, die eine veraenderliche (computergesteuert) Geometrie haben Koennen, um die Aerodynamik zu verbessern, sind mit den Generatoren verbunden;
- Generatoren, die mit einem Schwungrad verbunden sind, welches angetrieben wird durch einen elektrischen Motor. Dieser elektrische Motor wird seinerseits durch den ueberschuessigen Strom gespeist, der von den Akkumulatoren nicht aufgenommen wird;
- Aufhaengungsgneratoren angetrieben durch einen hydraulischen oder Druckluftmotor, versorgt durch die Stossdaempfer (V);
- Ein Generator (L), der auf einer gemeisamen Achse zusammen mit dem Motor (X) sitzt. Der Motor (X) und der Generator (L) arbeiten wechselweise, d.h., wenn der Motor arbeitet erzeugt der Generator keinen Strom und wenn der Motor nicht arbeitet erzeugt der Generator Strom.
- Bremsgeneratoren (H), verbunden durch ein gemeisamen Achse mit den Raedern des Fahrzeuges. Durch den Druck der Generatorbuersten (H) wird die Bremsung verursacht und ebenfalls Strom erzeugt.

2. Elektrisches Fahrzeug mit grosser Selbstaendigkeit entsprechend Forderung 1 ist gekennzeichnet durch die Aufhaengungsgeneratoren. Die z Z. benutzten Stossdaempfer werden durch Saugpumpen ersetzt, die zur Aufgabe haben, das Fluidum (Oel order Luft) in einem entsprechendem Gefaess zu pumpen und einen eigenen Motor anzutreibem, der seinerseits mit einem weiteren Geranerator verbunden ist. Die Saugpumpe hat eine doppelte Wirkung und muss sorgsam eingestellt werden sowohl bezueglich den Eintritt des Fluidums, als auch was die Sicherheitsventile betrifft, um die gleiche Wirkung zu erzielen wie die gegenwaertigen Stossdaempfer.

3. Elektrisches Fahrzeug mit grosser Selbstaendigkeit entsprechend Forderung 1 ist gekennzeichnet durch die Windgeneratoren, in deren Achsenturbinen sitzen (zwei oder nur eine in jede Achse). Diese Turbinen werden an Strategischen Plaetzen des Fahrzeuges angeordnet, und Koennen verschiedene Durchmesser und veraenderliche Geometrie haben. Die turbinen haben verschiedene Durchmesser fuer den Fall, dass das Fahrzeug mit niedriger oder hoher Geschwindigkeit faehrt.

4. Elektrisches Fahrzeug mit grosser Selbstaendigkeit entsprechend Forderung 1 ist gekennzeichnet dadurch, dass es einen Schwungradgenerator besitzt angetrieben durch einen elektrischen Motor. Dieser faengt an zu arbeiten immer wenn die Stromerzeugung groesser ist, als die von den Akkus aufgenommen werden kann und hat zur Aufgabe die Stromerzeugung fuer kurze Zeit zu stabilisieren.

5. Elektrisches Fahrzeug mit grosser Selbstaendigkeit entsprechend Forderung 2 ist gekennzeichnet durch eine Turbine mit veraenderlicher Geometrie. Sie bezitzt verlaengerungsbare Schaufeln die durch die eigene Fliehkraft sich um 2 - 3 Elemente verlaengern und Federnedie diese Verlaengerung beschraenken.

6. Elektrisches Fahrzeug mit grosser Selbstaendigkeit entsprechend Forderung 1 ist gekennzeichnet durch ein Getriebe mit Zahnraeder, die staendig in Beruehrung sind und mit hydraulische computergeregelte Steuerung.

7. Elektrisches Fahrzeug mit grosser Selbstaendigkeit entsprechend Forderung 3 ist gekennzeichnet dadurch, dass es ein Turbinenschutz besitzt so aufgebaut, dass die Windkraft unabhaengig von der Wagengeschwindigkeit ist.
Das elektrische Fahrzeug mit grosser Selbstaendigkeit besitzt eine an der Vorderseite angebrachten Fuehler, der die Windgeschwindigkeit staendig ueberprueft, da es moeglich ist, dass der Wagen gegen den Wind faehrt.

8. Elektrisches Fahrzeug mit grosser Selbstaendigkeit entsprechend Forderung 1 ist gekennzeichnet durch die Akkus, die in zwei Saetzen aufgeteilt sind, wobei der eine Strom liefert solange der andere aufgeladen wird. Das Umschalten der Saetze geschieht computergesteuert.

9. Elektrisches Fahrzeug mit grosser Selbstaendigkeit entsprechend Forderung 1 ist gekennzeichnet dadurch, dass es einen Zentralcomputer besitzt, fuer die Steuerung der verschiedenen Generatoren, der Akkus, Betriebsspannungen und andere peripherischen Einheiten.
